# EUROPEAN PATENT APPLICATION

(11) **EP 4 513 454 A1**
(43) Date of publication of application: **26.02.2025**
(21) Application number: 23315328.7
(22) Date of filing: 25.08.2023
(51) Int. Cl.: G06V 40/12, G06V 40/50

(54) **METHOD FOR AUTHENTICATING A USER USING A BIOMETRIC SENSOR**

(71) Applicant: THALES DIS FRANCE SAS, 92190 Meudon (FR)
(72) Inventor: Dang, Thi Tra Giang, 140051 SINGAPORE (SG); Bhogunuva Jeyapraksh, Visua, 319773 SINGAPORE (SG); Vibert, Laurent, 78340 Les Clayes sous Bois (FR)
(74) Representative: Grevin, Emmanuel

(57) **Abstract**

The invention is a method for authenticating a user (50) using a biometric sensor (40) comprising
capturing a candidate biometric data (60) of the user and extracting candidate elements (61). Based on a ranking (12), identifying a selected group (22) of reference templates stored in the portable device and initializing an incremental matching score (13);
- While an ending condition is not met, iteratively performing the steps:
- Identifying a selected reference template in the selected group based on metadata previously assigned to the selected reference template during a preliminary enrollment phase;
- Updating the incremental matching score with both a result of a match checking between said candidate elements and the selected reference template and a result of an overlapping check between said candidate elements and the selected reference template;

- If the incremental matching score is higher than a first threshold (15), considering the ending condition is met, then:
- Computing a coherence score (16) by checking that relative positions of the reference templates used to compute the incremental matching score are consistent with affine transformations between the reference templates used for computing the matching score,

- then considering the user is successfully authenticated only if the coherence score is higher than a second threshold (17).

## Description

### (Field of the invention)

The present invention relates to methods for authentication of a user through a biometric sensor. It relates particularly to methods for authenticating the user of a portable device embedding a biometric sensor.

### (Background of the invention)

Smart cards are portable small devices comprising at least a memory, a processor and an operating system for computing treatments. They may comprise services applications like payment or telecom applications. Such Smart cards embed at least one secure element that may comprise a plurality of memories of different types, like non-volatile memory and volatile memory. They are considered as tamper-resistant (or "secure") because they are able to control the access to the data they contain and to authorize or not the use of data by other machines. A smartcard may also provide computation services based on cryptographic components. In general, smartcards have limited computing resources and limited memory resources and they are intended to connect a host machine which provides them with electric power either,in contact mode or contactless mode.

A biometric smart card contains a biometric sensor like a fingerprint sensor that can contribute to the authentication of the user of the smart card. A biometric smart card may embed a biometric reference data built with biometric items captured from the user of the smart card. Such a biometric reference data is usually recorded during an enrollment phase. The biometric smartcard embeds a biometric algorithm designed to compare a data captured by the biometric sensor with the biometric reference data in order to authenticate the cardholder.

Fingerprint with minutiae matching is well known and stable over time due to its high interop-ability between different sensors, and it is used in many banking and payment products. However, minutiae matching requires sufficient topology of minutiae hence requiring big sensor area. The minutiae count is generally proportional to sensor size. For instance, small-size sensors which are not more than 8mmx8mm usually results in 160x160 pixel image (500dpi).

When sensor size decreases, fingerprint area decreases proportionally. As a result, enrollment process usually comprises the capture and storage of the information from multiple touches for the same finger, and matching process is a procedure to match a small-size query touch to multiple touches stored during enrollment to achieve a well-informed decision.

### (Summary of the Invention)

The basic approach to carry a matching procedure is to match the query image sequentially with individual enrolled referenced touches and get the maximum score amongst them. However, this approach does not give the optimal results, due to the lacking of global coherence information between enrolled touches hence the scoring is not optimized especially for case that the query image does not fully matched with one of the reference image but overlapping with a few of them.

Additionally, the sequential matching process is resource and time costly which extends the latency needed when sensor size is reduced.

A possibility to make the match lighter would be to group all the references templates that are matching together in a big template mixing all the features of the references. Big Template obtained from mixing of features does not show good results and matching with every reference template is costly.

There is a need to enhance the matching procedure carried out during authentication of a user based on data captured by a biometric sensor embedded in a portable device.

The invention aims at solving the above-mentioned technical problem.

The invention relies on a solution which is intermediate between brute force matching and subgroup matching.

An object of the present invention is a method for authenticating a user using a biometric sensor embedded in a portable device. The method comprises, during an authentication.phase of the user, the steps of:
- Capturing a candidate biometric data from a subject identifier of the user and extracting candidate elements from said candidate biometric data;
- Based on a ranking stored in the portable device, identifying a selected group of reference templates stored in the portable device and initializing an incremental matching score;

- While an ending condition is not met, iteratively performing the following steps:
   - Identifying a selected reference template in the selected group based on metadata previously assigned to the selected reference template during a preliminary enrollment phase;
   - Updating the incremental matching score with both a result of a match checking between said candidate elements and the selected reference template and a result of an overlapping check between said candidate elements and the selected reference template;
- If the incremental matching score is higher than a first threshold, considering the ending condition is met, then:
   - Computing a coherence score by checking that relative positions of the reference templates used to compute the incremental matching score are consistent with affine transformations between the reference templates used for computing the matching score,
   - then considering the user is successfully authenticated only if the coherence score is higher than a second threshold.

Advantageously, the action of identifying the selected reference template may be performed as follows:
during a first iteration, by selecting the reference template having the greatest number of overlap areas with other reference templates of the selected group;
during the next iterations, by selecting a next reference template based on a comparison between a relative position compared to the selected reference template and said next reference template.

Advantageously, if the incremental matching score is not higher than a first threshold and if the selected group contains at least one reference template that has not been selected, the method may loop to the step of identifying a next selected reference template in the selected group.

Advantageously, if the incremental matching score is not higher than a first threshold and if the selected group contains no reference template that has not been selected, the method may loop to the step of identifying a next selected group.

Advantageously, if the incremental matching score is not higher than a first threshold and if the selected group contains no reference template that has not been selected and if the portable device comprises no more group that has not been already selected, the user authentication may be refused.

Advantageously, during the preliminary enrollment phase of said user, the method may comprise the steps of:
- Capturing a biometric data from said subject identifier of said user and generating a biometric template from said biometric data;
- Identifying a chosen group of reference templates based on the ranking;
- Computing an overlapping score by comparing said biometric template with existing reference templates belonging to the chosen group;
- If the overlapping score is higher than a first limit:
   - Computing both matching results and relative positions between the biometric template and each other reference templates of said chosen group;
   - Storing in said memory both said matching results and relative positions as metadata uniquely assigned to said biometric template;
   - Adding said biometric template in said chosen group as a new reference template;
   - Establishing and storing the ranking of existing groups based on the number of reference templates in all existing groups;
   - Ending the enrollment phase if the number of reference templates stored in the portable device is above a second limit.

Advantageously, if the overlapping score is not higher than said first limit and at least on remaining group among the existing groups has not been chosen, the method may loop to the step of identifying a chosen group.

Advantageously, if the overlapping score is not higher than said first limit and all existing groups have been chosen, the method may comprise a step of:
- Creating a new group and adding the biometric template as a new reference template in said new group.

Another object of the present invention is a portable device comprising a biometric sensor for authenticating a user. The portable device is configured to, during an authentication phase of the user, :
- Capture a candidate biometric data from a subject identifier of the user and extract candidate elements from said candidate biometric data;
- Based on a ranking stored in the portable device, identify a selected group of reference template(s) stored in the portable device and initializing an incremental matching score;
- While an ending condition is not met, the portable device is configured to iteratively perform the following steps:
   - Identifying a selected reference template in the selected group based on metadata previously assigned to the selected reference template during a preliminary enrollment phase;
   - Updating the incremental matching score with both a result of a match checking between said candidate elements and the selected reference template and a result of an overlapping check between said candidate elements and the selected reference template;
- If the incremental matching score is higher than a first threshold, the portable device is configured to consider the ending condition is met then to:
   - Compute a coherence score by checking that relative positions of the reference templates used to compute the incremental matching score are consistent with affine transformations between the reference templates used for computing the matching score,
   - then to consider the user is successfully authenticated only if the coherence score is higher than a second threshold.

Advantageously, the portable device may be configured to perform identification of the selected reference template as follows:
during a first iteration, by selecting the reference template having the greatest number of overlap areas with other reference templates of the selected group;
during the next iterations, by selecting a next reference template based on a comparison between a relative position compared to the selected reference template and said next reference template.

Advantageously, if the incremental matching score is not higher than a first threshold and if the selected group contains at least one reference template that has not been selected, the portable device may be configured to loop to the step of identifying a next selected reference template in the selected group.

Advantageously, if the incremental matching score is not higher than a first threshold and if the selected group contains no reference template that has not been selected, the portable device may be configured to loop to the step of identifying a next selected group.

Advantageously, during the preliminary enrollment phase of said user, the portable device may be configured to:
- Capture a biometric data from said subject identifier of said user and to generate a biometric template from said biometric data;
- Identify a chosen group of reference templates based on tho ranking;
- Compute an overlapping score by comparing said biometric template with existing reference templates belonging to the chosen group;
- If the overlapping score is higher than a first limit, the portable device may be configured to:
   - Compute both matching results and relative positions between the biometric template and each other reference templates of said chosen group;
   - Store in said memory both said matching results and relative positions as metadata uniquely assigned to said biometric template;
   - Add said biometric template in said chosen group as a new reference template;
   - Establish and store the ranking of existing groups based on the number of reference templates in all existing groups;
   - End the enrollment phase if the number of reference templates stored in the portable device is above a second limit.

Advantageously, if the overlapping score is not higher than said first limit and at least on remaining group among the existing groups has not been chosen, the portable device may be configured to loop to the step of identifying a chosen group.

Advantageously, if the overlapping score is not higher than said first limit and all existing groups have been chosen, the portable device may be configured to:
- Create a new group and add the biometric template as a new reference template in said new group.

### (Brief description of the drawings)

Other characteristics and advantages of the present invention will emerge more clearly from a reading of the following description of a number of preferred embodiments of the invention with reference to the corresponding accompanying drawings in which:
- Fig. 1 shows a first part of an exemplary flow diagram for an enrollment phase according to an example of the invention;
- Fig. 2 shows a second part of an exemplary flow diagram for an enrollment phase according to an example of the invention;
- Fig. 3 shows a first part of an exemplary flow diagram for a user authentication phase according to an example of the invention;
- Fig. 4 shows a second part of an exemplary flow diagram for a user authentication phase according to an example of the invention;
- Fig. 5 shows an example of links between metadata and reference templates belonging to groups stored in a biometric smart card according to an example of the invention;
- Fig. 6 shows a diagram of architecture of a biometric smart card according to an example of the invention;
- Fig. 7 shows an example of a relative position computed between two reference templates during the preliminary enrollment phase according to an example of the invention; and
- Fig. 8 shows an example of a checking consistency of affine transformations between used reference templates, during the user authentication phase according to an example of the invention.

### (Detailed description of the preferred embodiments)

The invention may apply to any type of portable device embedding one or more biometric sensors.

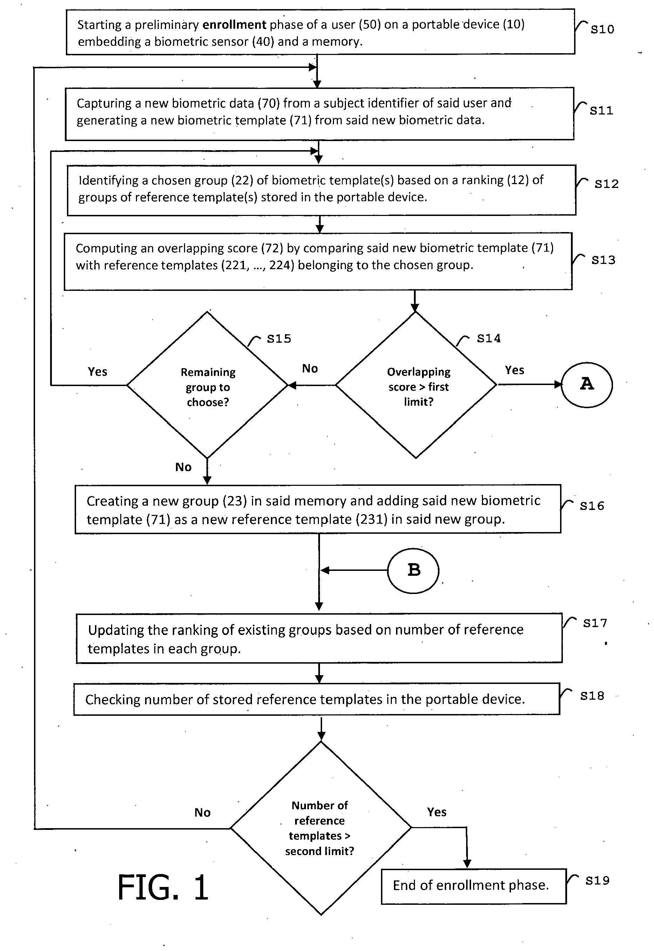

Figure 1 shows a first part of an exemplary flow diagram for a preliminary enrollment phase according to an example of the invention.

In this example, the portable device 10 is a biometric smart card uniquely associated to a user 50 (e.g. a bank customer if the biometric smart card is a payment card) and comprising a fingerprint sensor 40.

At step S10, a preliminary enrollment phase of the user 50 starts on the portable device 10.

Then the biometric sensor 40 captures a new biometric data 70 from a subject identifier of the user and the portable device generates a new biometric template 71 from this new biometric data 70. (Step S11)

The subject identifier of the user can be a chosen finger or thumb when the biometric sensor is a fingerprint sensor. The subject identifier could be another part of the body like the face, a palm or an iris, depending on the type of biometric sensor.'

Then the portable device identifies a chosen group 22 of biometric templates based on a ranking 12 of groups of reference templates stored in the portable device. (Step S12). More details about the ranking are provided below. If the portable device comprises no group, it creates a first group and as described at step S16.

Then the portable device computes an overlapping score 72 by comparing the new biometric template 71 with reference template(s) belonging to the chosen group.

### (Step S13)

Then the portable device compares the computed overlapping score 72 with a first limit 19. (Step S14)

The overlapping score 72 can be in the range of [0, 77000], which includes the number of matched key points based on both texture and topology. However, a smaller range can be used as long as it meets FAR-4 objectives.

The first limit 19 can be defined as a percentage of the maximum value that the overlapping score can reach.

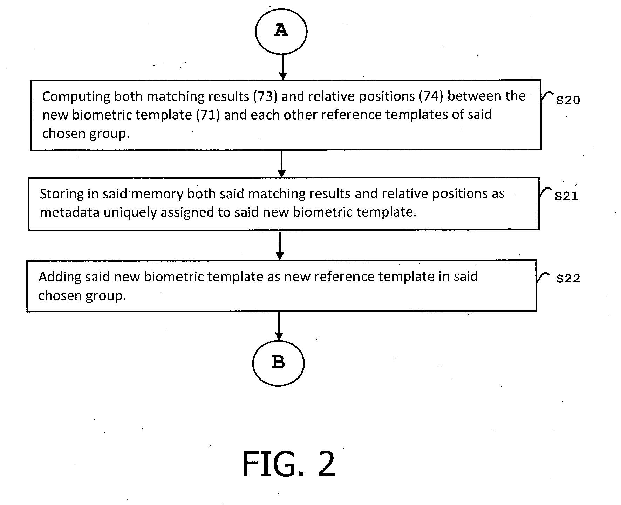

If the overlapping score 72 is above the first limit, the method continues at step S20 of Figure 2 (link noted "A") in which the portable device computes both matching results 73 and relative positions 74 between the new biometric template 71 and each other reference templates of the chosen group.

Then the portable device stores in its memory both the matching results and relative positions as metadata uniquely assigned to the new biometric template 71 (Step S21) .

In some embodiments, the matching results may incorporate overlapping area score computed during matching operations.

The portable device adds the new biometric template 71 as new reference template in the chosen group (Step S22). Since the new reference template is the new biometric template, it is to be noted that the metadata is also uniquely assigned to the new reference template.

Then the method continues at step S17 of Figure 1 (link noted "B") in which the portable device may update the ranking 12 of existing groups based on number of reference templates in each group.

The ranking 12 reflects the degree of priority of each of the groups existing in the portable device.

Then the portable device checks the number of stored reference templates in the portable device at step S18.

If the number of stored reference templates is above the second limit 18, the portable device ends the preliminary enrollment phase at step S19. The second limit 18 may be set to an integer value in the range [12, ..., 20] for instance. Depending on the implemented algorithms, other ranges can be used, in particular the minimum limit of the range can be fixed to 2.

If the number of stored reference templates is not above the second limit 18, the portable device may loop to step S11.

Now returning to step S14, if the overlapping score 72 is not above the first limit, the portable device may check if its memory contains a remaining group to choose (I.e. a group that has not already been chosen.) at step S15.

If there is at least one remaining group to choose, the portable device may loop to step S12.

If there is no remaining group to choose, the portable device may create a new group 23 in its memory and add the new biometric template 71 as a new reference template in the newly created group 23 (Step S16) and may continue to step S17.

In some embodiments, the ranking 12 of existing groups can be done by counting the number of reference templates in each group and sorting the groups accordingly so that the highest priority group (to be selected) is the one with the most reference templates.

In some embodiments, the group whose reference templates were used to authenticate the user successfully during the previous authentication phase can be placed in the highest priority in the ranking.

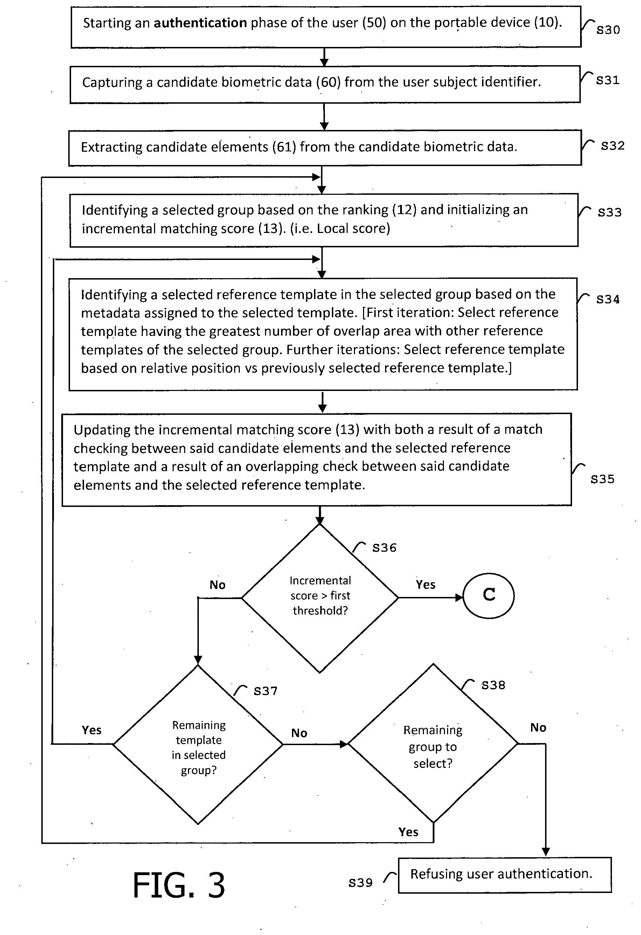

Figure 3 shows a first part of an exemplary flow diagram for a user authentication phase according to an example of the invention.

In this example, the portable device 10 is similar to the one of Figures 1 and 2.

At step S30, an authentication phase of the user 50 starts on the portable device 10. Such a user authentication can be triggered during an applicative transaction (like a payment) involving the portable device and a terminal connected to it.

Then the biometric sensor 40 captures a candidate biometric data 60 from the subject identifier of the user (step S31) .

Then the portable device extracts candidate elements 61 from the candidate biometric data 60 (step S32).

Then the portable device identifies a selected group based on the ranking 12 and initializes an incremental matching score 13 (also called local score) at step S33.

Then the portable device identifies a selected reference template in the selected group based on the metadata assigned to the selected template at step S34.

In some embodiment, during the very first iteration, the portable device selects the reference template having the greatest number of overlap areas with other reference templates of the selected group and during next iterations, the portable device selects a next reference template based on a comparison between a relative position compared to the selected reference template and the next reference template.

The match algorithm used to compare the selected template with the candidate elements 61 can return a score reflecting either a no match, a partial match or a full match.

In some embodiments, in case of no match (or very low match score), the next selected template can be selected in the same group but with a sufficient distance from the previous selected template and in case of partial match, the next selected template can be selected by searching for a proximate one based on relative position.

Then the portable device updates the incremental matching score 13 with both a result of a match checking between the candidate elements 61 and the selected reference template and a result of an overlapping check between the candidate elements 61 and the selected reference template. (Step S35)

Then the portable device compares the incremental matching score 13 to a first threshold 15 at step S36.

The incremental matching score 13 takes a value in a predefined-range. The first threshold 15 can be set in relation to this predefined range and a minimum matching rate considered acceptable.

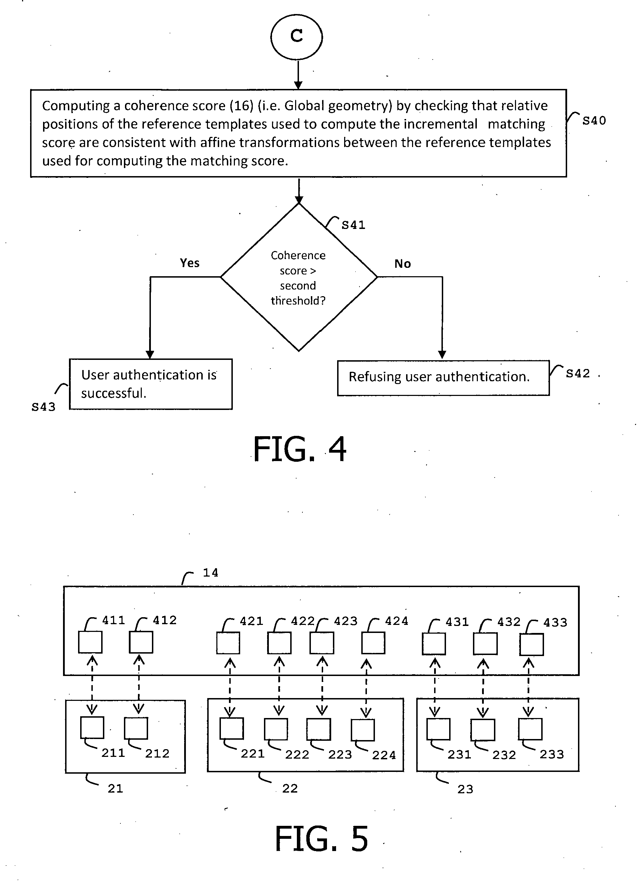

If the incremental score 13 is higher than the first threshold 15, the portable device considers that an ending condition of the loop is met and continues to step S40 of Figure 4 (link noted "C") in which the portable device computes a coherence score 16 (also named Global geometry score) by checking that relative positions of the reference templates used to compute the incremental matching score are consistent with affine transformations between the reference templates used for computing the matching score.

Then the portable device compares the coherence score 16 to a second threshold 17 at step S41.

If the coherence score 16 is higher than the second threshold 17, the portable device considers that the user 50 has been successfully authenticated (Step S43), else the portable device refuses the user authentication (step S42) .

In some embodiments, the incremental score 13 can be built as a composite score gathering both the matching score (with an assigned preset weight factor) and the coherence score (with another assigned preset weight factor). Thus, steps S36 and S41 can be merged in a single comparison operation leading to either accepting or refusing the user authentication.

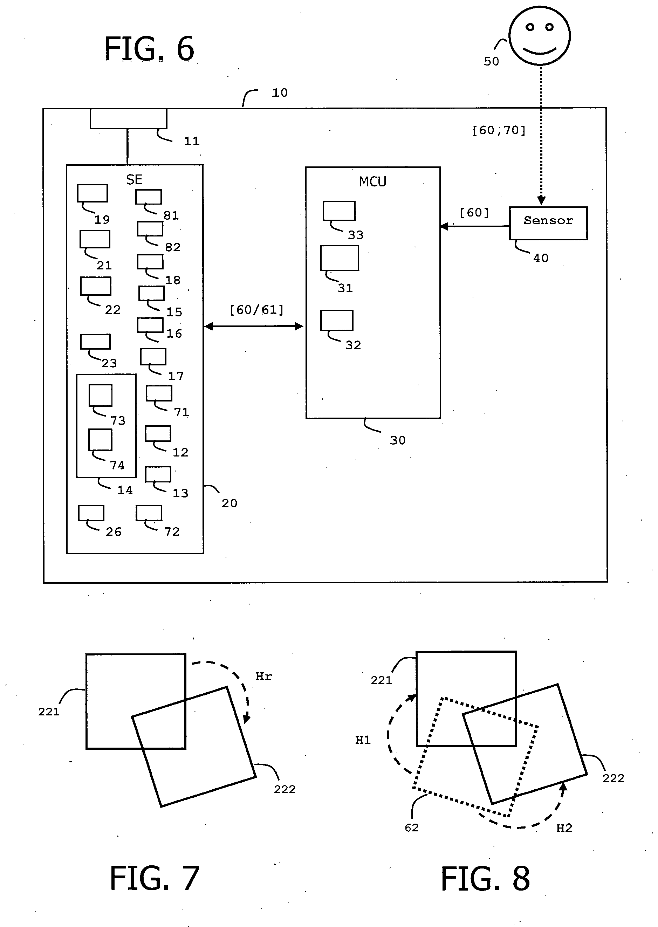

Figure 7 depicts an example of a relative position computed between two reference templates during the preliminary enrollment phase according to an example of the invention.

During step S20 of the preliminary enrollment phase, the portable device computes the relative position between the existing template reference 221 and the new template reference 222 (corresponding to the newly acquired biometric template). The relative position may be represented by an affine transformation Hr between the two reference templates 221 and 222.

Figure 8 depicts an example of a checking the consistency of affine transformation between used reference templates during the user authentication phase according to an example of the invention.

Candidate elements 61 have been extracted from a candidate biometric data captured by the sensor 40.

During the user authentication phase, the candidate elements 61 form a candidate template 62 supposed to be compared successively to the reference templates 221 and 222 for computing the incremental matching score.

Thus, the portable device computes the relative position between the template reference 221 and the new candidate template 62. This relative position may be represented by an affine transformation H1 between the template reference 221 and the new candidate template 62. Similarly, the portable device computes the relative position between the template reference 222 and the new candidate template 62. This relative position may be represented by an affine transformation H2 between the template reference 222 and the new candidate template 62.

At step S40 of the user authentication phase, the portable device checks that the relative positions of the two reference templates used to compute the incremental matching score are consistent with affine transformations between the reference templates. For instance, the portable device may check that the combination of the affine transformations H1 and H2 is coherent with the affine transformation Hr. The portable device generates a coherence score 16 reflecting the result of the check between affine transformations H1, H2 and Hr.

Now returning to step S36 of Figure 3, if the incremental matching score 13 is not above the first threshold 15, the portable device may check if its memory contains a remaining template in the selected group to select (I.e. a template that has not already been selected.) at step S37.

If there is at least one remaining template to select, the portable device may loop to step S34.

If there is no remaining template to select, the portable device may check if its memory contains a remaining group to select (I.e. a group that has not already been selected during the authentication phase.) at step S38.

If there is at least one remaining group to select, the portable device may loop to step S33.

If there is no remaining group to select, the portable device can refuse the user authentication (step S39) .

As can be understood from the above presented examples, the method for authenticating the user can iteratively perform a series of steps until an ending condition of the loop is met. The ending condition may be the fact that the incremental score 13 is higher than the first threshold 15 (step S36), or that there is no remaining group to select at step S38.

In some embodiments, if the portable device considers that the user 50 has been successfully authenticated at step S43, the portable device may add the used candidate template 62 as a new reference template in an existing (or new) group selected as described at Figure 1. Thus, an additional enrollment can be performed "on-the-fly" by the portable device during an authentication phase. To determine if the candidate template 62 is good enough to be enrolled, the portable device may use a specific matching threshold dedicated to this purpose.

Figure 5 depicts an example of links between metadata and reference templates belonging to groups stored in a biometric portable device according to an example of the invention.

In this example, the non-volatile memory of the portable device 10 comprises three groups 21, 22 and 23 of reference templates. The group 21 comprises two reference templates 211 and 212. The group 22 comprises four reference templates 221, 222, 223 and 224 and the third group 23 comprises three reference templates 231, 232 and 234.

The non-volatile memory of the portable device 10 comprises a set 14 of metadata 411, ..., 433.

Each metadata of the set 14 is uniquely associated with a single reference template. For instance, the metadata 411 is uniquely assigned to the reference template 211, the metadata 424 is uniquely assigned to the reference template 224 and the metadata 433 is uniquely assigned to the reference template 233.

Other embodiments can be considered for storing and handling the metadata in the portable device.

Although described for the case of fingerprint, the invention may also be applied to many types of biometric data like iris or facial data.

Figure 6 shows diagram of architecture of a portable device according to an example of the invention.

In this example, the portable device 10 is a payment smart card allocated to an individual 50.

The smart card 10 comprises a secure chip 20 (also called secure element), a biometric sensor 40 and a controller 30 of the sensor. The controller 30 may be a processing unit (also named processor unit) like a microcontroller unit (MCU). The biometric sensor may be a conventional biometric sensor like a fingerprint sensor.

The controller 30 is coupled to the biometric sensor 40 and able to perform biometric pre-computation process on raw biometric data captured by the biometric sensor. The controller 30 is configured to retrieve captured biometric data 60 (also named raw biometric data) from the sensor 40 and to apply some treatments to the retrieved biometric data 60.

The controller 30 may comprise an anti-spoofing detector 33 aiming at detecting spoofing attacks on the sensor 40. The anti-spoofing detector 33 is designed to execute an anti-spoofing algorithm 31 to distinguish real biometric data from fake data.

The controller 30 may comprise a second firmware 32 designed to extract remarkable items from the raw biometric data 60 collected by the sensor 40.

The controller 30 comprises a processor and a non-volatile memory (not shown). The non-volatile memory may store the firmware 31 and the firmware 32 which include program instructions that arc executed by the processor to perform the features of the controller.

In the example of Fig. 6, the secure element 20 is based on a conventional smart card chip with additional features. The secure element 20 is able to contribute to a banking transaction with an external machine. For instance, the transaction may be a payment transaction or cash withdrawal.

The secure element 20 comprises a biometric algorithm (i.e. Match algorithm) 26 aiming at comparing a reference template with remarkable items extracted from the biometric data 60 collected by the sensor 40. The secure element 20 comprises an operating system (not shown).

The smart card 10 comprises a communication interface 11 which may be designed to exchange data with outside in contact mode, in contactless mode or both modes. The communication interface 11 is linked to the secure element 20.

The secure element 20 comprises a hardware processor and a non-volatile memory (not shown). In one embodiment, the non-volatile memory stores program instructions which are executed by the processor to perform the functions of the secure element. In one embodiment, the functions of the secure element 20 may be implemented as pure hardware solution or a combination of firmware and hardware.

In some embodiments, the controller 30 and the secure element 20 may be separated hardware components.

In some embodiments, the controller 30 and the secure element 20 may be merged in a single hardware component adapted to perform features of both the controller 30 and the secure element 20.

The secure element 20 comprises one or more group of reference template, a ranking,12 of the one or more group, a set 14 of metadata previously assigned to the reference templates during a preliminary enrollment phase, a first threshold 15 and a second threshold 17.

The secure element 20 comprises an enrollment engine 81 and an authentication engine 82.

During an authentication phase of the user 50, the portable device 10 is configured to capture a candidate biometric data 60 from a subject identifier of the user and to extract candidate elements 61 from this candidate biometric data. Then based on the ranking 12 previously stored in its memory, the authentication engine is configured to identify a selected group 22 of reference template(s) stored in the portable device and to initialize an incremental matching score 13.

Then while an ending condition is not met, the authentication engine is configured to iteratively perform the following steps:
- Identifying a selected reference template in the selected group based on metadata previously assigned to the selected reference template,
- Updating the incremental matching score with both a result of a match checking between said candidate elements and the selected reference template and a result of an overlapping check between said candidate elements and the selected reference template.

If the incremental matching score is higher than the first threshold 15, the authentication engine is configured to consider the ending condition is met then to compute a coherence score 16 by checking that relative positions of the reference templates used to compute the incremental matching score are consistent with affine transformations between the reference templates used for computing the matching score. The authentication engine is configured to consider the user is successfully authenticated only if the coherence score is higher than the second threshold 17.

The range of the coherence score can set to [0-9] or any appropriate range of values. The second threshold 17 can be predefined in relation to the range of the coherence score so as to guarantee a high level of reliability for the authentication decision.

In some embodiments, the authentication engine can be configured to perform the identification of the selected reference template as follows:
during a first iteration, by selecting the reference template having the greatest number of overlap areas with other reference templates of the selected group; and
during the next iterations, by selecting a next reference template based on a comparison between a relative position compared to the selected reference template and said next reference template.

In some embodiments, if the incremental matching score is not higher than the first threshold and if the selected group contains at least one reference template that has not been selected, the authentication engine can be configured to loop to the step of identifying (S34) a next selected reference template in the selected group.

In some embodiments, if the incremental matching score is not higher than a first threshold and if the selected group contains no reference template that has not been selected, the authentication engine can be configured to loop to the step of identifying (S33) a next selected group.

In some embodiments, the secure element 20 comprises a first limit 19 and a second limit 18. During the preliminary enrollment, the portable device is configured to capture a biometric data 70 from a subject identifier of the user and to generate a biometric template 71 from the captured biometric data. The enrollment engine is configured to identify a chosen group of reference templates based on the ranking 12 and to compute an overlapping score by comparing the biometric template with existing reference templates belonging to the chosen group.

If the overlapping score is higher than the first limit 19, the enrollment engine is configured to compute both matching results 73 and relative positions 74 between the biometric template and each other reference templates of the chosen group. The enrollment engine is configured to store in the memory of the portable device both the matching results and relative positions as metadata uniquely assigned to the biometric template. The enrollment engine is configured to add the biometric template in the chosen group as a new reference template and to establish and store an updated ranking 12 of existing groups based on the number of reference templates in all existing groups. The enrollment engine is configured to ends the enrollment phase if the number of reference templates stored in the portable device is above the second limit 18.

In some embodiments, if the overlapping score is not higher than the first limit 19 and at least on remaining group among the existing groups has not been chosen, the enrollment engine can be configured to loop to the step of identifying a chosen group.

In some embodiments, if the overlapping score is not higher than the first limit 19 and all existing groups have been chosen, the enrollment engine can be configured to create a new group' and add the biometric template as a new reference template in the newly created group.

Thanks to some embodiments of the invention, there are 70% of genuine cases that can be identified within 6 matches instead of going through exhausted search with all available templates in the storage. Thus, treatment time for user authentication can be dramatically reduced compared to conventional mechanisms.

The invention is not limited to the described embodiments or examples. In particular, the described examples and embodiments may be combined.

The invention is not limited to biometric smart cards and applies to any biometric appliances allocated to a user, like an access badge, a biometric ring or a connected watch or connected bracelet for instance.

The portable device may embed several biometric sensors (of same or different types).

Although examples of the invention have been provided in the banking domain, the invention also applies to other domains: For example, the biometric portable device may be designed to provide access to a physical building, room or area.

Although examples of the invention have been provided for a fingerprint sensor, it may apply to devices embedding any biometric sensor targeting various types of data: iris, voice, face, blood or palm print for examples.

## Claims

1. A method for authenticating a user (50) using a biometric sensor (40) embedded in a portable device (10), **characterized in that** the method comprises during an authentication phase of the user:
- Capturing (S31) a candidate biometric data (60) from a subject identifier of the user and extracting (S32) candidate elements (61) from said candidate biometric data;
- Based on a ranking (12) stored in the portable device, identifying (S33) a selected group (22) of reference templates stored in the portable device and initializing an incremental matching score (13);
- While an ending condition is not met, iteratively performing the following steps:
- Identifying (S34) a selected reference template in the selected group based on metadata previously assigned to the selected reference template during a preliminary enrollment phase;
- Updating (S35) the incremental matching score with both a result of a match checking between said candidate elements and the selected reference template and a result of an overlapping check between said candidate elements and the selected reference template;
- If the incremental matching score is higher than a first threshold (15), considering the ending condition is met, then:
- Computing (S40) a coherence score (16) by checking that relative positions of the reference templates used to compute the incremental matching score are consistent with affine transformations between the reference templates used for computing the matching score,
- then considering (S43) the user is successfully authenticated only if the coherence score is higher than a second threshold (17).

2. The method according to claim 1, wherein identifying (S34) the selected reference template is performed as follows:
during a first iteration, by selecting the reference template having the greatest number of overlap areas with other reference templates of the selected group;
during the next iterations, by selecting a next reference template based on a comparison between a relative position compared to the selected reference template and said next reference template.

3. The method according to claim 1, wherein, if the incremental matching score is not higher than a first threshold and if the selected group contains at least one reference template that has not been selected, the method loops to the step of identifying (S34) a next selected reference template in the selected group.

4. The method according to claim 1, wherein, if the incremental matching score is not higher than a first threshold and if the selected group contains no reference template that has not been selected, the method loops to the step of identifying (S33) a next selected group.

5. The method according to claim 1, wherein, if the incremental matching score is not higher than a first threshold and if the selected group contains no reference template that has not been selected and if the portable device comprises no more group that has not been already selected, the user authentication is refused (S39).

6. The method according to claim 1, wherein, during the preliminary enrollment phase of said user, the method comprises:
- Capturing (S11) a biometric data (70) from said subject identifier of said user and generating a biometric template (71) from said biometric data;
- Identifying (S12) a chosen group (21, 22) of reference templates based on the ranking;
- Computing (S13) an overlapping score (72) by comparing said biometric template with existing reference templates belonging to the chosen group;
- If the overlapping score is higher than a first limit (19):
- Computing (S20) both matching results (73) and relative positions (74) between the biometric template and each other reference templates of said chosen group;
- Storing (S21) in said memory both said matching results and relative positions as metadata uniquely assigned to said biometric template;
- Adding (S22) said biometric template in said chosen group as a new reference template;
- Establishing and storing (S17) the ranking (12) of existing groups based on the number of reference templates in all existing groups;
- Ending - (S19) the enrollment phase if the number of reference templates stored in the portable device is above a second limit (18).

7. The method according to claim 6, wherein, if the overlapping score is not higher than said first limit and at least on remaining group among the existing groups has not been chosen, the method loops to the step of identifying (S12) a chosen group.

8. The method according to claim 6, wherein, if the overlapping score is not higher than said first limit and all existing groups have been chosen:
- Creating (S16) a new group and adding the biometric template as a new reference template in said new group.

9. A portable device (10) comprising a biometric sensor (40) for authenticating a user (50), **characterized in that** the portable device is configured to, during an authentication phase of the user:
- Capture a candidate biometric data (60) from a subject identifier of the user and extract candidate elements (61) from said candidate biometric data;
- Based on a ranking (12) stored in the portable device, identify a selected group (22) of reference template(s) stored in the portable device and initializing an incremental matching score (13);
- While an ending condition is not met, the portable device is configured to iteratively perform the following steps:
- Identifying a selected reference template in the selected group based on metadata previously assigned to the selected reference template during a preliminary enrollment phase;
- Updating the incremental matching score with both a result of a match checking between said candidate elements and the selected reference template and a result of an overlapping check between said candidate elements and the selected reference template;
- If the incremental matching score is higher than a first threshold (15), the portable device is configured to consider the ending condition is met then to:
- Compute a coherence score (16) by checking that relative positions of the reference templates used to compute the incremental matching score are consistent with affine transformations between the reference templates used for computing the matching score,
- then to consider the user is successfully authenticated only if the coherence score is higher than a second threshold (17).

10. The portable device according to claim 9, wherein the portable device is configured to perform identification of the selected reference template as follows:
during a first iteration, by selecting the reference template having the greatest number of overlap areas with other reference templates of the selected group;
during the next iterations, by selecting a next reference template based on a comparison between a relative position compared to the selected reference template and said next reference template.

11. The portable device according to claim 9, wherein, if the incremental matching score is not higher than a first threshold and if the selected group contains at least one reference template that has not been selected, the portable device is configured to loop to the step of identifying (S34) a next selected reference template in the selected group.

12. The portable device according to claim 9, wherein, if the incremental matching score is not higher than a first threshold and if the selected group contains no reference template that has not been selected, the portable device is configured to loop to the step of identifying (S33) a next selected group.

13. The portable device according to claim 9, wherein, during the preliminary enrollment phase of said user, the portable device is configured to:
- Capture a biometric data (70) from said subject identifier of said user and to generate a biometric template (71) from said biometric data;
- Identify a chosen group (21, 22) of reference templates based on the ranking;
- Compute an overlapping score (72) by comparing said biometric template with existing reference templates belonging to the chosen group;
- If the overlapping score is higher than a first limit (19), the portable device is configured to:
- Compute both matching results (73) and relative positions (74) between the biometric template and each other reference templates of said chosen group;
- Store in said memory both said matching results and relative positions as metadata uniquely assigned to said biometric template;
- Add said biometric template in said chosen group as a new reference template;
- Establish and store the ranking (12) of existing groups based on the number of reference templates in all existing groups;
- End the enrollment phase if the number of reference templates stored in the portable device is above a second limit (18).

14. The portable device according to claim 13, wherein, if the overlapping score is not higher than said first limit and at least on remaining group among the existing groups has not been chosen, the portable device is configured to loop to the step of identifying a chosen group.

15. The portable device according to claim 13, wherein, if the overlapping score is not higher than said first limit and all existing groups have been chosen, the portable device is configured to:
- Create a new group and add the biometric template as a new reference template in said new group.
